# EUROPÄISCHE PATENTANMELDUNG

(11) **EP 2 505 460 A2**
(43) Veröffentlichungstag der Anmeldung: **03.10.2012**
(21) Anmeldenummer: 12162489.4
(22) Anmeldetag: 30.03.2012
(51) Int. Cl.: B62D 25/20

(54) **Ladeboden mit hohem Gleitreibwert**

(30) Priorität: 31.03.2011 DE 102011001682
(71) Anmelder: Paula Mertzen GmbH, 45356 Essen (DE)
(72) Erfinder: Mertzen, Eva, 45357 Essen (DE)
(74) Vertreter: Michalski Hüttermann & Partner

(57) **Zusammenfassung**

Die vorliegende Erfindung betrifft einen Ladeboden mit hohem Gleitreibwert. Insbesondere betrifft die vorliegende Erfindung einen Ladeboden für Transportfahrzeuge, welcher einen hohen Gleitreibwert gegenüber zu transportierender Ladung aufweist und somit zur Ladungssicherung beitragen kann, und der gleichzeitig eine niedrige Bauhöhe aufweisen kann. Der erfindungsgemäße Ladeboden ist insbesondere aus Metall gefertigt und weist auf der in Richtung der zu transportierenden Ladung ausgerichteten Vorderseite (110) Rippen (111, 112) mit einer senkrecht zum Ladeboden ausgebildeten Rippenhöhe, einer in einer orthogonalen Richtung (300) zu den Rippen (111, 112) ausgebildeten Rippenbreite und einem abgerundeten Rippenkopf (114) auf, wobei ein Durchmesser der Rundung des Rippenkopfs (114) kleiner ist als eine Breite der Rippe bei einer halben Rippenhöhe, und umfasst ferner auf einer von der zu transportierenden Ladung abgewandten Rückseite (210) angeordnete Rippen (211, 212) und ist dadurch gekennzeichnet, dass eine Rippenbreite der Rippen (111, 112, 211, 212) am Rippenfuß (113, 213) größer ist als eine Rippenbreite der Rippen (111, 112, 211, 212) am Rippenkopf (114, 214).

## Beschreibung

Die vorliegende Erfindung betrifft einen Ladeboden mit hohem Gleitreibwert. Insbesondere betrifft die vorliegende Erfindung einen Ladeboden für Transportfahrzeuge, welcher einen hohen Gleitreibwert gegenüber zu transportierender Ladung aufweist und somit zur Ladungssicherung beitragen kann, und der gleichzeitig eine niedrige Bauhöhe aufweisen kann.

Ladeböden in Fahrzeugen, wie beispielsweise Nutzfahrzeuge zum Gütertransport, aber auch Eisenbahnwagons oder Transportschiffen, müssen erheblichen Belastungen standhalten. Insbesondere müssen solche Ladeböden den durch die auf ihnen abgestellte zu transportierende Last einwirkende Belastung standhalten. Darüber hinaus entstehen während der Be- und Entladungsvorgänge häufig hohe Belastungen durch das Befahren der Ladeböden mit Flurförderfahrzeugen, wie beispielsweise Gabelstaplern oder Hubwagen. Die dabei auftretenden punktuellen Belastungen können, bedingt durch das Gewicht der Ladung und des Flurförderfahrzeugs, sehr hoch sein und führen zu einer Druckbelastung auf der befahrenen bzw. beladenen Oberseite und einer gleichzeitigen Zugbelastung auf der Unterseite des Ladebodens. Zur Erhöhung der Stabilität der Ladeböden gegen solche Belastungen werden diese daher im Stand der Technik durch auf der Unterseite der Ladeböden angebrachte Winkelprofile verstärkt. Dies führt jedoch nachteiliger Weise zu relativ großen Aufbauhöhen in einer Größenordnung von mehreren Zentimetern. Da die zulässige Gesamthöhe eines Fahrzeugs jedoch vielfach begrenzt ist, führt eines große Aufbauhöhe des Ladebodens zu einem Verlust an Ladekapazität.

Die vielfach als Ladeböden genutzten Sperrholz- oder Siebdruckplatten bieten zwar den Vorteil der leichten Verarbeitbarkeit, müssen jedoch, um eine hinreichende Stabilität aufzuweisen, relativ dick ausgeführt werden und haben dadurch ein hohes Gewicht, was zu Lasten der Ladekapazität geht. Darüber hinaus zeigen solche Ladeböden nur einen geringen Gleitreibwert gegenüber der Ladung in einer Größenordnung von 0,25 bis 0,3, welcher sich insbesondere durch Feuchtigkeit oder Nässe noch deutlich reduziert. Hierdurch vergrößert sich die Gefahr, dass Ladung auf der Transportfläche verrutscht.

Die deutsche Auslegungsschrift DE 1 080 418 offenbart einen aus stranggepressten, im Wesentlichen ebenen Metallplanken zusammengesetzten Ladeboden für Nutzfahrzeuge, dessen Planken längsseitig ineinandergreifen und sich mit längslaufenden Stützrippen auf senkrecht zu ihnen verlaufenden Längsträgern der Tragekonstruktion abstützen und mit Hilfe von Verbindungsstücken auf diesen Längsträgern befestigt sind, wobei die Planken am einen Längsrand eine Wulst aufweisen, mit einer ebenen, gegenüber der Plankenoberfläche tiefer gesetzten, oberen Fläche und am anderen Längsrand eine annähernd halbkreisförmige, nach oben geöffnete Rinne, die zum Teil von der Planke her durch einen Vorsprung, unter den der Wulst der anstoßenden Planke bündig zu liegen kommt, überdeckt ist. Die zur Verbindung der Planken mit der Tragkonstruktion dienenden Verbindungsstücke umgreifen einen Wulst an einem Seitenflansch eines Längsträgers und sind längsverschiebbar an diesem angeordnet; sie weisen ferner einen Schlitz auf, in den eine Schraube eingreift, die mit ihrem Kopf verschiebbar, aber gegen Verdrehen gesichert, in einer nach unten geöffneten T-Nut in einer der Stützrippen der Planken gehalten ist. Die seitlichen, senkrecht zu den Planken laufenden Umrandungsprofile sind im Querschnitt im Wesentlichen L-förmig und weisen am senkrecht stehenden Flansch einen längslaufenden, nach oben gerichteten Ansatz auf, hinter den aus den Stützrippen der Planken an deren Enden herausgearbeitete Nasen greifen, während der andere Flansch einen längslaufenden Wulst aufweist zur Aufnahme von Verbindungsstücken zwecks Befestigung an den Planken.

Die europäische Patentanmeldung EP 1 076 000 A2 offenbart einen Ladeboden für Fahrzeuge, der aus mehreren nebeneinanderliegenden Bohlen oder Platten besteht, die zusammen eine Ladefläche bilden. Der beschriebene Ladeboden ist dadurch gekennzeichnet, dass wenigstens einige der Bohlen oder Platten auf ihrer der Ladefläche gegenüberliegenden Unterseite zumindest eine Ausnehmung aufweisen, die sich über wesentliche Zugbelastungsbereiche der Bohlen bzw. Platten erstreckt. In einer solchen Ausnehmung ist ein Verstärkungselement zumindest mit einem Teilabschnitt formschlüssig eingelegt. Die Verstärkungselemente sind zudem fest mit der zugehörigen Bohle oder Platte verbunden.

Die deutsche Gebrauchsmusterschrift DE 20 2008 009 748 U1 offenbart eine Verbundplatte für den Ladeboden, für Wände oder für das Dach eines Nutzfahrzeuges mit einem Kern aus Balsaholz, der mit mehrlagigem Baufurniersperrholz verbunden ist, wobei das Baufurniersperrholz eine kernnahe innere Lage, eine Außenlage und wenigstens eine dazwischen angeordnete Zwischenlage aufweist, wobei die Fasern der inneren Lage und die Fasern der Außenlage jeweils in einer ersten Richtung und die Fasern der wenigstens einen Zwischenlage in einer zweiten Richtung orientiert sind, die senkrecht zur ersten Richtung verläuft.

Es ist die Aufgabe der vorliegenden Erfindung, einen Ladeboden für Fahrzeuge anzugeben, welcher bei einer geringen Ausbauhöhe einen verbesserten Beitrag zur Ladungssicherung leisten kann.

Gelöst wird diese Aufgabe durch einen Ladeboden gemäß Anspruch 1. Weitere Ausgestaltungen finden sich in den abhängigen Unteransprüchen sowie der nachfolgenden Beschreibung.

Es wird somit ein Ladeboden, insbesondere aus Metall, vorgeschlagen, wobei dieser auf einer in Richtung der zu transportierenden Ladung ausgerichteten Vorderseite Rippen mit einer senkrecht zum Ladeboden ausgebildeten Rippenhöhe, einer in einer orthogonalen Richtung zu den Rippen ausgebildeten Rippenbreite und einem abgerundeten Rippenkopf aufweist, wobei ein Durchmesser der Rundung des Rippenkopfs kleiner ist als eine Breite der Rippe bei einer halben Rippenhöhe, und ferner auf einer von der zu transportierenden Ladung abgewandten Rückseite angeordnete Rippen umfasst, dadurch gekennzeichnet, dass eine Rippenbreite der Rippen am Rippenfuß größer ist als eine Rippenbreite der Rippen am Rippenkopf.

Durch eine Ausstattung des Ladebodens mit den auf der Vorderseite ausgebildeten Rippen können an Kontaktflächen mit der Ladung Werte für eine Flächenpressung erreicht werden, mit denen große Gleitreibwerte erzielbar sein können. Dadurch, dass die Rippenbreite der Rippen am Rippenfuß größer ist als die Rippenbreite der Rippen am Rippenkopf, kann ohne eine für die Verwendung als Ladeboden signifikante Beeinflussung der Stabilität ein niedriges Flächengewicht und eine niedrige Bauhöhe erreicht werden, wodurch eine weitere Optimierung der Nutzlast des Fahrzeugs erreicht werden kann.

In einer bevorzugten Ausgestaltungsform der Erfindung beträgt der Abstand zwischen zwei vorderseitigen Rippen ≥ 6mm und ≤ 10mm, vorzugsweise zwischen ≥ 6,5mm und ≤ 9,5mm, besonders bevorzugt zwischen ≥ 7mm und ≤ 9mm, und insbesondere 8mm. Es hat sich gezeigt, dass der Abstand zwischen den Rippen einen maßgeblichen Einfluss auf den Gleitreibwert zwischen Ladeboden und Ladung ausübt. In dem angegebenen Abstandbereich lassen sich überraschenderweise sehr hohe Werte für die Gleitreibung zwischen Ladeboden und Ladung erreichen. Dabei wird der Wert der Gleitreibung in Übereinstimmung mit der DIN-EN 12195-1 und VDI 2700 ff ermittelt. Hierzu wird eine Stahlpalettenbox mit vier Stahlplattenfüßen, wie sie beispielsweise zum Transport von stehenden Gasflaschen eingesetzt wird, mit einem Gewicht von 1164 kg mit einem Zugmess-System in Quer- und Längsrichtung über den Ladeboden gezogen und der und die dafür notwendige Zugkraft ermittelt.

In einer bevorzugten Ausgestaltungsform können die rückwärtigen Rippen Schulterbreiten zwischen ≥ 2mm und ≤ 20mm, vorzugsweise zwischen ≥ 3mm und ≤ 15mm, besonders bevorzug ≥ 4mm und ≤ 10mm, und insbesondere 5mm aufweisen.

Die Rippenhöhe der rückwärtigen Rippen beträgt in einer Ausgestaltung der Erfindung vorzugsweise zwischen 10% und 40%, vorzugsweise zwischen 15% und 35%, insbesondere 33% der Gesamtaufbauhöhe des Ladebodens. Bei einer Gesamtaufbauhöhe des Ladebodens von 10mm beträgt die Rippenhöhe zwischen 1,5mm und 4,0mm, insbesondere 3,3mm.

Die Rippenhöhe der zur transportierenden Ladung zugewandten vorderseitigen Rippen beträgt in einer Ausgestaltung der Erfindung bevorzugt ebenfalls zwischen 15% und 35%, insbesondere 33 % der Gesamtaufbauhöhe des Ladebodens. Bei einer Gesamtaufbauhöhe des Ladebodens von 10mm beträgt die Rippenhöhe zwischen 1,5mm und 4,0mm, insbesondere 3,3mm.

In einer besonders bevorzugten Ausgestaltung der Erfindung beträgt die Höhe der vorderseitigen und der rückseitigen Rippen, sowie des sich zwischen vorderseitigen Rippen und rückseitigen Rippen ergebenden Materialstegs 33% der Gesamtaufbauhöhe des Ladebodens.

Gemäß einer weiteren Ausgestaltung der Erfindung weist der Ladeboden ein Flächengewicht ≤ 15kg/m², vorzugsweise ≤ 13kg/m², besonders bevorzugt ≤ 12kg/m², noch bevorzugter ≤ 11,5kg/m² auf. Hierdurch lässt sich in vorteilhafter Weise die Nutzlast des Fahrzeugs im Vergleich zu bekannten Ladeböden erhöhen, was insgesamt zu einer wirtschaftlicheren Nutzung des Fahrzeugs führt.

Ein solches Flächengewicht lässt sich gemäß einer Ausgestaltung der Erfindung insbesondere durch die Verwendung von Aluminium und/oder aluminiumhaltigen Legierungen als Material zur Herstellung entsprechender Ladeböden erreichen. Hierbei ist es insbesondere bevorzugt, wenn der Ladeboden zumindest teilweise aus einer Aluminiumlegierung gefertigt ist, welche neben Aluminium als Legierungsbestandteile Magnesium, Zink, Silicium und/oder Kupfer aufweisen. Weiter bevorzugt ist es dabei, dass der Ladeboden zumindest teilweise aus einer härtbaren Magnesiumlegierung mit einer Festigkeit von ≥ 150Nm/mm², vorzugsweise ≥ 200Nm/mm² gefertigt ist.

In einer weiteren Ausgestaltung der Erfindung weist der Ladeboden eine Gesamtaufbauhöhe von < 15mm, vorzugsweise < 10mm, besonders bevorzugt < 8mm auf. Hierdurch kann bei einer zulassungsbedingten Höhenbegrenzung des Fahrzeugs die Ladekapazität in vorteilhafter Weise gegenüber bekannten Ladeböden verbessert werden.

Gemäß einer weiteren bevorzugten Ausgestaltung eines erfindungsgemäßen Ladebodens weist dieser Mittel zur ortsfesten lösbaren Befestigung des Ladebodens an einem Unterboden und/oder Rahmen auf. Geeignete Mittel zur Befestigung in Sinne der Erfindung sind beispielsweise, aber nicht abschließend, Verschraubungen, Klemmen, Bolzen oder auch lösbare stoffschlüssige Verbindungen wie beispielsweise Verklebungen. Insbesondere kann es vorgesehen sein, dass der Ladeboden Bohrungen aufweist, durch welche hindurch dieser beispielsweise mittels Schraubverbindungen mit einem Rahmen- und/oder Trägerprofil eines Fahrzeugchassis verbunden ist.

In einer weiteren Ausgestaltung des erfindungsgemäßen Ladebodens weisen zumindest die der zu transportierenden Ladung zugewandten vorderseitigen Rippen Ausnehmungen auf. Hierdurch kann das Flächengewicht des Ladebodens weiter reduziert werden. Dabei kann es vorgesehen sein, dass die Länge der Ausnehmungen in den vorderseitigen Rippen zwischen ≥ 1% und ≤ 50 %, vorzugsweise zwischen ≥ 2% und ≤ 10 % der Gesamtlänge der Rippen beträgt. Es kann erfindungsgemäß dabei vorgesehen sein, dass die Ausnehmungstiefe nur einen Teil der Rippenhöhe der Rippen umfasst oder auch der vollen Rippenhöhe entspricht. Darüber hinaus kann es vorgesehen sein, dass die Ausnehmung über die gesamte Aufbauhöhe des Ladebodens verläuft und somit den Ladeboden perforiert. In einer bevorzugten Ausführung der Erfindung sind die Ausnehmungen in den der zu transportierenden Ladung zugewandten vorderseitigen Rippen V-förmig ausgeführt, wobei der durch die Ausnehmungen eingeschlossene Winkel zwischen ≥ 40° und ≤ 80°, vorzugsweise zwischen ≥ 50° und ≤ 70°, insbesondere ca. 60° beträgt. Der Abstand zwischen zwei Ausnehmungen in einer Rippe kann zwischen ≥ 4mm und ≤ 20mm, vorzugsweise zwischen ≥ 6mm und ≤ 10mm und insbesondere ca. 8mm betragen. In einer besonders bevorzugten Ausgestaltung des Ladebodens entspricht der Abstand zwischen den Ausnehmungen dem Abstand zwischen den vorderseitigen Rippen.

In einer weiteren Ausgestaltung der Erfindung kann die Flankensteilheit der vorderseitigen Rippen zwischen ≥ 10° und ≤ 30°, vorzugsweise zwischen ≥ 12° und ≤ 25°, insbesondere ca. 15° betragen. Der durch die Flanken der vorderseitigen Rippen eingeschlossene Winkel kann zwischen ≥ 20° und ≤ 60°, vorzugsweise zwischen ≥ 24° und ≤ 50°, insbesondere ca. 30° betragen. Die Flankensteilheit der rückseitigen Rippen kann zwischen ≥ 20° und ≤ 45°, vorzugsweise zwischen ≥ 25° und ≤ 40°, insbesondere ca. 35° betragen. Der durch die Flanken der rückseitigen Rippen eingeschlossene Winkel kann zwischen ≥ 40° und ≤ 90°, vorzugsweise zwischen ≥ 50° und ≤ 80°, und insbesondere ca. 70° betragen.

In einer weiteren Ausgestaltung der Erfindung beträgt die Breite der Täler zwischen den rückseitigen Rippen an der Talsohle zwischen ≥ 1mm und ≤ 10mm, vorzugsweise zwischen ≥ 2mm und ≤ 5mm. Die Breite der Täler zwischen den vorderseitigen Rippen kann an der Talsohle zwischen ≥ 3mm und ≤ 10mm, vorzugsweise zwischen ≥ 4mm und ≤ 8mm, insbesondere ca. 5mm betragen.

In einer bevorzugten Ausgestaltung der Erfindung ist der Ladeboden aus einer Mehrzahl von Paneel-Elementen aufgebaut, wobei die einzelnen Paneel-Elemente mittels Rastelementen lösbar aneinander verbindbar sind. Dabei kann es vorgesehen sein, dass die Paneele als Rastelement am einen Längsrand eine Wulst oder Nase aufweisen, mit einer ebenen, gegenüber der Paneelen-Oberfläche tiefer gesetzten, oberen Fläche und am anderen Längsrand eine mit der genannten Wulst oder Nase korrespondierende, nach oben geöffnete Ausnehmung aufweisen, die zum Teil von der Paneele her durch einen Vorsprung, unter den der Wulst oder die Nase der anstoßenden Paneele bündig in Anlage kommt, überdeckt ist.

In einer weiter bevorzugten Ausführungsform des erfindungsgemäßen Ladebodens weisen die zuvor beschriebenen Paneele eine Längsausdehnung von 50cm bis 255cm, vorzugsweise von ca. 250cm auf. Die Querausdehnung der Paneele kann dabei zwischen 150mm und 300mm, vorzugsweise ca. 210mm betragen. Das Verhältnis zwischen Längs- und Querausdehnung der Paneele kann dabei bevorzugt in einem Bereich zwischen ≥ 1,5 und ≤ 17, vorzugsweise ≥ 5 und ≤ 15, insbesondere ca. 11,90 liegen.

In einer besonders bevorzugten Ausführungsform sind die zuvor beschriebenen Paneele als stranggepresstes Profil gefertigt, welches auf eine entsprechende Länge abgelängt wurde.

Die Erfindung ist nachfolgend anhand von Figuren und Ausführungsbeispielen weiter beschrieben. Hierbei zeigt
Fig. 1 einen Querschnitt durch eine Ausgestaltung eines erfindungsgemäßen Ladebodens 100;
Fig. 2 eine Detailansicht A der in Fig. 1 gezeigten Ausgestaltung eines erfindungsgemäßen Ladebodens 100;
Fig. 3 eine Detailansicht B der in Fig.1 gezeigten Ausgestaltung eines erfindungsgemäßen Ladebodens 100;
Fig. 4 eine Detailansicht von Ausnehmungen 120 in einer vorderseitigen Rippen 111 einer Ausführungsform eines erfindungsgemäßen Ladebodens 100;
Fig. 5 eine perspektivische Ansicht einer Ausführungsform eines erfindungsgemäßen Ladebodens 100.

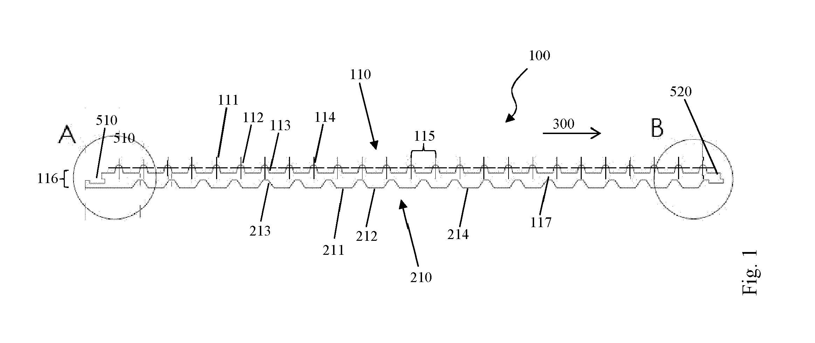

Fig. 1 zeigt einen Querschnitt durch eine Ausgestaltung eines erfindungsgemäßen Ladebodens 100. Auf der zu der zu transportierenden Ladung gerichteten Vorderseite 110 des Ladebodens 100 sind Rippen 111, 112 angeordnet. Die auf der Vorderseite 110 angeordneten Rippen 112, 122 weisen einen Abstand 115 von Rippenkammmitte zu Rippenkammmitte von 8mm auf. Die Höhe der Rippen 111, 112 beträgt 2,5mm. Der Rippenkopf 114 der Rippen 111, 112 ist in der gezeigten Ausführungsform abgerundet, um ein besseres Begehen oder Befahren des Ladebodens 100 zu ermöglichen. Die Flanken 113 der Rippen 111, 112 weisen eine Flankensteilheit von 15° auf, woraus sich ein von den Flanken 113 einer Rippe 111, 112 eingeschlossener Winkel von 30° ergibt. Die der zu transportierenden Ladung abgewandten Rückseite 210 des Ladebodens 100 weist Rippen 211, 212 auf. Der Rippenkopf 214 der rückseitigen Rippen 211, 212 ist abgeflacht. Die Höhe der Rippen 211, 212 beträgt in der gezeigten Ausführungsform 2,6mm. Die Flanken 213 der Rippen 211, 212 weisen eine Flankensteilheit von 35° auf, woraus sich ein von den Flanken 213 einer Rippe 211, 212 eingeschlossener Winkel von 70° ergibt. Die Gesamtaufbauhöhe 116 des Ladebodens 100 in der in Figur 1 gezeigten Ausführungsform beträgt 7,5mm, woraus sich unter Berücksichtigung der Höhe der vorderseitigen Rippen 111, 112 und der rückseitigen Rippen 211, 212 für den Steg 117 zwischen dem Rippental der vorderseitigen Rippen 111, 112 und dem Rippental der rückseitigen Rippen 211, 212 von 2,4mm ergibt. Die gezeigte Ausführungsform weist in orthogonaler Richtung 300 zu den Rippen 111, 112 einen Gleitreibwert µ_{Dlängs} von 0,6 auf. In Verlaufsrichtung zu den Rippen 111, 112 weist der Ladeboden 100 einen Gleitreibwert µ_{Dquer} 0,55 auf. In der gezeigten Ausführungsform des erfindungsgemäßen Ladebodens 100 ist dieser aus einzelnen Paneelen aufgebaut, welche mittels Rastelementen 510, 520 lösbar miteinander verbindbar sind und so zu einer entsprechenden Gesamtfläche zusammenfügbar sind. Die Querausdehnung des gezeigten Paneels beträgt dabei 210mm. Die Längsausdehnung ist über weite Bereiche variierbar, wobei insbesondere eine Längs von 100cm bevorzugt ist. Das Paneel weist am einen Längsrand eine Nase 520 mit einer ebenen, gegenüber der Paneelen-Oberfläche tiefer gesetzten Fläche 521 und am anderen Längsrand eine mit der genannten Nase 520 korrespondierende, nach oben geöffnete Ausnehmung 510 auf, die zum Teil von der Paneele durch einen Vorsprung 511, unter den die Nase 520 der anstoßenden Paneele bündig in Anlage kommt, überdeckt ist.

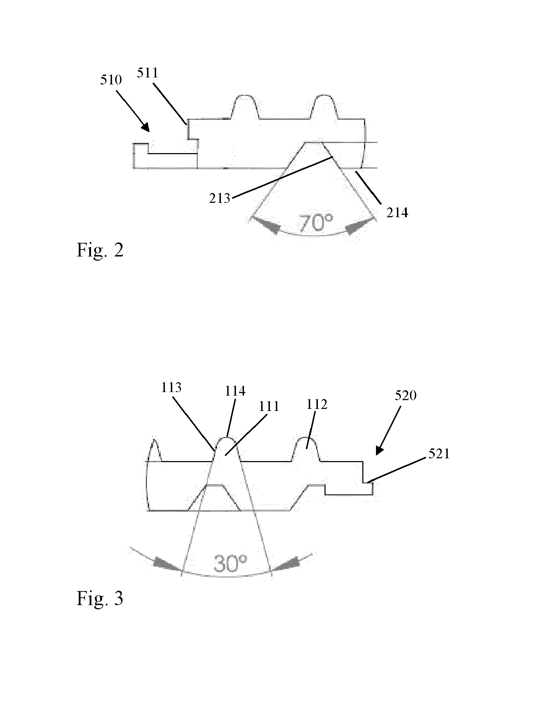

Fig. 2 zeigt den Detailausschnitt A der in Fig. 1 gezeigten Ausführungsform eines erfindungsgemäßen Ladebodens 100. Daraus ist zu erkennen, dass die vorderseitigen Rippen 111, 112 einen abgerundeten Rippenkopf 114 aufweisen, wobei ein Durchmesser der Rundung des Rippenkopfs kleiner ist als eine Breite der Rippe bei einer halben Rippenhöhe. Insbesondere sind in Fig. 2 die Flanken 213 der rückseitigen Rippen 211 zu erkennen, welche in der gezeigten Ausführungsform einen Winkel von 70° einschließen. Auch zu erkennen ist die als Rastelement dienende Ausnehmung 510 mit dem Vorsprung 511, unter den die Nase 520 der anstoßenden Paneele bündig in Anlage kommt und welcher diese zumindest teilweise überdeckt.

Fig. 3 zeigt den Detailausschnitt B der in Fig. 1 gezeigten Ausführungsform eines erfindungsgemäßen Ladebodens 100. Insbesondere sind in Fig. 3 die Flanke 113 der vorderseitigen Rippen 111, 112 zu erkennen, welche in der gezeigten Ausführungsform einen Winkel von 30° einschließen. Auch zu erkennen ist die als Rastelement dienende Nase 520 mit der gegenüber der Oberfläche des Ladebodens tiefer gesetzten Fläche 521, welche in die Ausnehmung 510 eines angrenzenden Paneels eingreifen kann, um so beide Paneele miteinander lösbar zu verbinden.

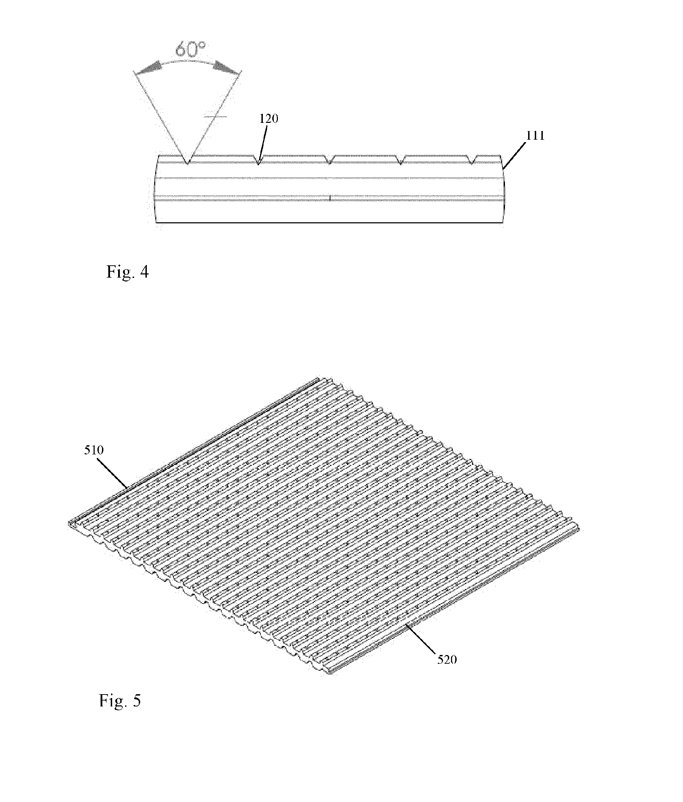

Fig. 4 zeigt eine Detailansicht von Ausnehmungen 120 in einer vorderseitigen Rippen 111 einer Ausführungsform eines erfindungsgemäßen Ladebodens 100. Die Ausnehmungen 120 weisen in der gezeigten Ausführungsform eine Tiefe von 1mm aus, was unter Berücksichtigung der Höhe der vorderseitigen Rippen 111, 112 von 2,5mm 40% der Gesamthöhe der der Rippen 111, 112 entspricht. Die Ausnehmungen 120 sind V-förmig mit einem Winkel von 60° ausgeführt. Der Abstand zwischen den Ausnehmungen 120 in einer Rippe beträgt in der gezeigten Ausführungsform 8mmund entspricht somit dem Abstand zwischen zwei vorderseitigen Rippen 111 und 112.

Fig. 5 zeigt eine perspektivische Ansicht einer Ausführungsform eines erfindungsgemäßen Ladebodens 100, wie er detailliert in den Fig. 1 bis 4 beschrieben wurde.

### Bezugszeichenliste

- 100: Ladeboden
- 110: Vorderseite
- 111: Rippe
- 112: Rippe
- 113: Rippenflanke
- 114: Rippenkopf
- 115: Abstand zwischen Rippen
- 116: Aufbauhöhe
- 117: Steg
- 210: Rückseite
- 211: Rippe
- 212: Rippe
- 213: Rippenflanke
- 214: Rippenkopf
- 300: orthogonale Richtung
- 510: Ausnehmung
- 511: Vorsprung
- 520: Nase
- 521: tiefer gesetzte Fläche

## Patentansprüche

1. Ladeboden (100), insbesondere aus Metall, wobei dieser auf einer in Richtung der zu transportierenden Ladung ausgerichteten Vorderseite (110) Rippen (111, 112) mit einer senkrecht zum Ladeboden ausgebildeten Rippenhöhe, einer in einer orthogonalen Richtung (300) zu den Rippen (111, 112) ausgebildeten Rippenbreite und einem abgerundeten Rippenkopf (114) aufweist, wobei ein Durchmesser der Rundung des Rippenkopfs (114) kleiner ist als eine Breite der Rippe bei einer halben Rippenhöhe, und ferner auf einer von der zu transportierenden Ladung abgewandten Rückseite (210) angeordnete Rippen (211, 212) umfasst, **dadurch gekennzeichnet, dass** eine Rippenbreite der Rippen (111, 112, 211, 212) am Rippenfuß (113, 213) größer ist als eine Rippenbreite der Rippen (111, 112, 211, 212) am Rippenkopf (114, 214).

2. Ladeboden nach Anspruch 1, wobei der Abstand (115) zwischen zwei vorderseitigen Rippen (111, 112) ≥ 6mm und ≤ 10mm, vorzugsweise zwischen ≥ 6,5mm und ≤ 9,5mm, besonders bevorzugt zwischen ≥ 7mm und ≤ 9mm, und insbesondere 8mm beträgt.

3. Ladeboden nach Anspruch 1, wobei die rückwärtigen Rippen (211, 212) Schulterbreiten zwischen ≥ 2mm und ≤ 20mm, vorzugsweise zwischen ≥ 3mm und ≤ 15mm, besonders bevorzugt ≥ 4mm und ≤ 10mm, und insbesondere 5mm aufweisen

4. Ladeboden nach einem der vorhergehenden Ansprüche, wobei dieser ein Flächengewicht ≤15kg/m², vorzugsweise ≤13kg/m², besonders bevorzugt ≤12kg/m², noch bevorzugter ≤1 1,5kg/m² aufweist.

5. Ladeboden nach einem der vorhergehenden Ansprüche, wobei dieser eine Gesamtaufbauhöhe (116) von < 15mm, vorzugsweise < 10mm, und besonders bevorzugt < 8mm aufweist.

6. Ladeboden nach einem der vorhergehenden Ansprüche, wobei dieser aus Aluminium oder einer aluminiumhaltigen Legierung gefertigt ist.

7. Ladeboden nach einem der vorhergehenden Ansprüche, wobei dieser Mittel zur ortsfesten lösbaren Befestigung des Ladebodens an einem Unterboden und/oder Rahmen aufweist.

8. Ladeboden nach einem der vorhergehenden Ansprüche, wobei dieser aus einer Mehrzahl von Paneel-Elementen (500) aufgebaut ist, wobei die einzelnen Paneel-Elemente (500) mittels Rastelementen (510, 520) lösbar aneinander verbindbar sind.

9. Verwendung eines Ladebodens nach einem der Ansprüche 1 bis 8 als Bodenbelag auf der Transportfläche von Fahrzeugen, insbesondere Nutz-, See- oder Schienenfahrzeugen.
